# FASCICULE DE BREVET EUROPEEN

(11) **EP 3 743 294 B1**
(45) Date de publication et mention de la délivrance du brevet: **15.12.2021**
(21) Numéro de dépôt: 19708130.0
(22) Date de dépôt: 28.01.2019
(51) Int. Cl.: B60C 11/03, B60C 11/12

(54) **PNEUMATIQUE**
REIFEN
TIRE

(30) Priorité: 28.01.2018 FR 1870085
(43) Date de publication de la demande: 02.12.2020
(73) Titulaire: COMPAGNIE GENERALE DES ETABLISSEMENTS MICHELIN, 63000 Clermont-Ferrand (FR)
(72) Inventeur: BLOUIN, Damien, 63040 CLERMONT-FERRAND Cedex 9 (FR); BONNETON, Quentin, 63040 CLERMONT-FERRAND Cedex 9 (FR); CAVRO, Marion, 63040 CLERMONT-FERRAND Cedex 9 (FR)
(74) Mandataire: Boyer, Chris Michel
(86) Numéro de dépôt international: PCT/FR2019/050174
(87) Numéro de publication internationale: WO 2019/145655

(56) Documents cités:
- EP-A1- 0 775 600
- EP-A1- 2 965 925
- EP-A2- 0 729 854
- DE-A1-102007 044 435

## Description

### DOMAINE TECHNIQUE DE L'INVENTION

La présente invention concerne un pneumatique comportant une bande de roulement pourvue de deux bords, un centre et une pluralité de blocs répartis selon une direction circonférentielle, chaque bloc s'étendant vers le centre de ladite bande de roulement selon une direction oblique, la pluralité de blocs comprenant au moins deux blocs adjacents selon la direction circonférentielle, chaque bloc adjacent desdits au moins deux blocs adjacents ayant au moins une incision s'étendant dans la longueur dudit bloc.

### ETAT DE LA TECHNIQUE ANTERIEURE

**le** document FR2998511 décrit une bande de roulement pour pneumatique neige comportant une pluralité de blocs séparés par des rainures. Les blocs sont pourvus d'incisions se séparant en plusieurs parties à partir d'une certaine profondeur, dites incisions complexes. Chaque incision complexe présente, selon une vue en coupe, une première partie rectiligne s'étendant radialement, à partir de la surface de roulement de la bande de roulement, et une seconde partie prolongeant la première partie et comportant au moins deux branches comprenant chacune une extrémité. La bande de roulement comprend, en outre, des cavités, chaque cavité s'étend entre les branches d'une incision complexe. Chaque cavité comprend un fond situé au même niveau que les extrémités des branches. Les cavités et les rainures de la bande de roulement sont configurées de sorte que cette bande de roulement présente un taux d'entaillement surfacique en fin d'usure supérieur ou égal à 35%. En outre, la distance D entre deux branches de deux incisions complexes adjacentes est au moins égale à 2 mm.

Ce mode de réalisation permet, à partir d'un certain niveau d'usure, de générer des cavités permettant d'améliorer les performances sur sol enneigé.

**Le** document US2007095447 décrit une bande de roulement de pneumatique comportant des blocs pourvus de rainures. Sous la surface des blocs à leur état neuf, les rainures comportent des élargissements, formant des rainures élargies lorsque l'usure de la bande de roulement atteint la zone des élargissements.

Les documents EP0775600A1, EP0729854, EP2965925A1, et DE102007044435A1 traitent de bandes de roulement de pneumatiques pour un usage hivernal. La bande de roulement comprend des blocs qui sont séparés par rainures et qui comportent des lamelles pour une recherche de compromis de performances.

Tous ces modes de réalisation permettent de prolonger les performances des pneumatiques en cours d'usure. Toutefois, les concepteurs sont toujours à la recherche d'améliorations des performances, en particulier pour les pneumatiques conçus pour la saison hivernale, où les conditions sont particulièrement difficiles, notamment du fait des conditions de roulage très variables à prendre en compte, avec la pluie, la neige, la glace, sous oublier le sol sec. La prise en compte de ces larges spectres de conditions est particulièrement délicate car les solutions performantes dans certaines conditions donnent parfois des résultats en retrait dans d'autres conditions. Par ailleurs, les exigences en terme de niveau sonore sont également de plus en plus restrictives.

Il persiste donc un besoin pour des bandes de roulement de pneumatiques permettant d'améliorer les performances sur un large spectre.

### EXPOSE DE L'INVENTION

Tout d'abord, un premier objectif de l'invention consiste à prévoir un pneumatique dont la bande de roulement permet de réduire le niveau sonore généré lors du roulage.

Un autre objectif de l'invention consiste à prévoir un pneumatique dont la bande de roulement permet d'obtenir un excellent compromis d'adhérence sur sol enneigé/sol mouillé en préservant les performances sur sol sec.

Un autre objectif de l'invention consiste à prévoir un pneumatique dont la bande de roulement permet d'améliorer la durabilité. La présente invention a pour objet un pneumatique tel que couvert par la revendication indépendante 1.

L'invention prévoit un pneumatique comportant une bande de roulement pourvue de deux bords, un centre et une pluralité de blocs répartis selon une direction circonférentielle, chaque bloc s'étendant vers le centre de ladite bande de roulement selon une direction oblique, la pluralité de blocs comprenant au moins deux blocs adjacents selon la direction circonférentielle, chaque bloc adjacent desdits au moins deux blocs adjacents ayant au moins une incision s'étendant dans la longueur dudit bloc, des largeurs LB11 et LB12 desdits au moins deux blocs adjacents étant différentes et le nombre d'incisions Nib dans lesdits au moins deux blocs adjacents étant différent.

Un tel agencement permet, en minimisant les fréquences de résonnance, de réduire le niveau sonore généré lors du roulage. Pour les blocs de largeur réduite, afin de conserver un espace suffisant entre les incisions et ainsi permettre de conserver le niveau de rigidité tout en évitant les risques liés à d'éventuels arrachements de portion de blocs dans les zones amincies, le nombre d'incisions est adapté, dans ce cas en supprimant des incisions. Une telle répartition des incisions permet par ailleurs d'obtenir un bon niveau d'adhérence sur sol enneigé.

Par direction oblique, on entend entre 30° et 60° et plus préférentiellement à sensiblement 45° par rapport à axe médian circonférentiel du pneumatique.

Pour obtenir la largeur d'un bloc, on détermine la moyenne des largeurs du bloc mesurées transversalement par rapport à l'incision, au point de départ, au point d'arrivée et au milieu du bloc.

Selon un mode de réalisation avantageux, les incisions partitionnent chaque bloc desdits au moins deux blocs adjacents en deux demi-blocs, la séparation étant sensiblement dans le sens longitudinal des blocs.

Selon l'invention, pour chacun desdits au moins deux blocs adjacents, le nombre d'incisions Nib et la largeur LB du bloc sont sélectionnés de sorte que : 3.5 mm < LB/(Nib +1)< 7 mm.

Cette caractéristique permet de conserver un niveau sensiblement uniforme de rigidité entre les blocs. Les performances sur sol enneigé ou mouillé sont favorisées.

Selon un autre mode de réalisation avantageux, au moins un bloc desdits au moins deux blocs adjacents comprend une première incision et une seconde incision, chaque incision s'étend dans la longueur dudit au moins un bloc, la première incision ayant une profondeur H_{GE}, ladite première incision comportant un élargissement dans ladite profondeur et ladite seconde incision ayant une profondeur H_{L}, avec 0.1 H_{GE} < H_{L} < 0.9 H_{GE}.

L'élargissement, par exemple pour former un profil en forme de goutte d'eau permet de conserver les caractéristiques et les performances du pneumatique lors de l'usure de la bande de roulement, y compris lors d'un niveau d'usure avancée, en libérant progressivement les zones élargies des incisions. La seconde incision, sans élargissement en profondeur, forme avantageusement un profil sensiblement rectangulaire. Ce type de profil permet de régler la densité d'incisions pour de bonnes caractéristiques d'adhérence sur sol enneigé, tout en préservant un bon niveau de rigidité de bloc.

Selon une variante avantageuse, ladite seconde incision a une profondeur H_{L}, avec 0.4 H_{GE} < H_{L} < 0.6 H_{GE} .

Selon encore un mode de réalisation avantageux, la profondeur H_{GE} de la première incision est comprise entre 6 mm et 8 mm. Une telle profondeur permet de prolonger les caractéristiques même dans les cas d'usure profonde.

Selon un mode de réalisation avantageux, la première incision partitionne le bloc en deux demi-blocs. Un tel partitionnement permet d'optimiser les performances de chacun des demi-blocs.

Selon encore un mode de réalisation avantageux, au moins un bloc desdits au moins deux blocs adjacents s'étend sensiblement jusqu'à un des bords de ladite bande de roulement.

En variante, lesdits au moins deux blocs adjacents s'étendant jusqu'à un des bords de la bande de roulement comprennent une rainure séparant au moins un bloc desdits au moins deux blocs adjacents en deux parties espacées axialement.

Selon un autre mode de réalisation avantageux, chaque partie dudit au moins un bloc comprend un nombre différent d'incisions.

De manière avantageuse, la bande de roulement est directionnelle.

### DESCRIPTION DES FIGURES

Tous les détails de réalisation sont donnés dans la description qui suit, complétée par les figures 1 à 5, présentées uniquement à des fins d'exemples non limitatifs, et dans lesquelles :
- la figure 1 est une représentation schématique en coupe d'un exemple de bloc de sculpture de bande de roulement ;
- la figure 2 est une représentation schématique d'une portion d'une bande de roulement correspondant sensiblement à l'aire de contact pour un premier exemple de réalisation;
- la figure 3 est une représentation schématique d'une portion d'une bande de roulement correspondant sensiblement à l'aire de contact pour un second exemple de réalisation;
- la figure 4 est une représentation schématique d'une portion d'une bande de roulement correspondant sensiblement à l'aire de contact pour une variante de réalisation de l'exemple de la figure 3;
- la figure 5 est une représentation schématique d'une portion d'une bande de roulement correspondant sensiblement à l'aire de contact pour une autre variante de réalisation de l'exemple de la figure 3.

### DESCRIPTION DETAILLEE DE L'INVENTION

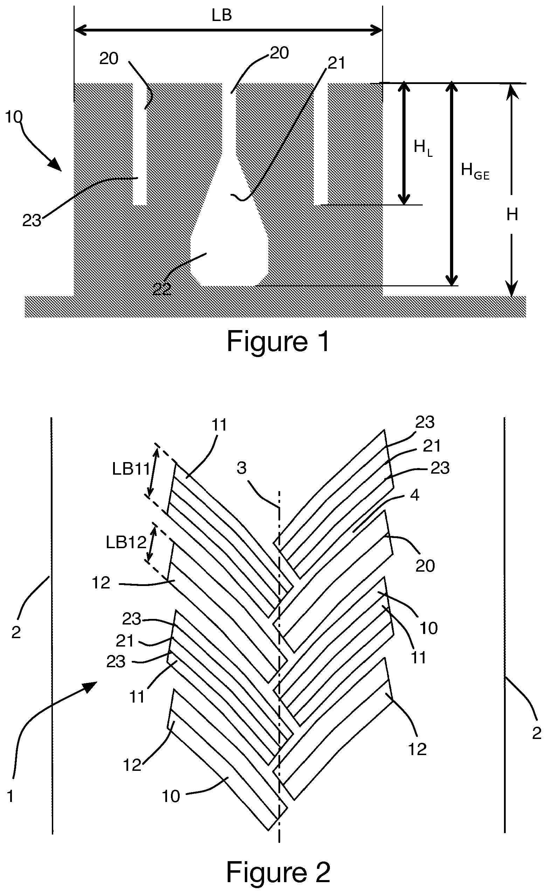

La figure 2 est une représentation schématique d'un premier exemple de mise en œuvre illustrant une portion d'une bande de roulement 1 d'un pneumatique. Cette bande de roulement comporte deux bords 2, un axe central 3 et une pluralité de blocs 10 répartis circonférentiellement sur la bande de roulement. Les blocs 10 sont avantageusement agencés avec une certaine inclinaison par rapport à l'axe 3, par exemple entre 30° et 60°, et plus préférentiellement 45°. Dans ce qui suit, on qualifie cette inclinaison de direction oblique des blocs.

Dans ce mode de réalisation, les blocs 10 démarrent avec un léger décalage par rapport au bord 2 de la bande de roulement. Ils se prolongent ensuite vers l'axe central 3. La pluralité de blocs 10 comprend au moins deux blocs adjacents 11 et 12. Le bloc 11 a une largeur de bloc LB11 et le bloc 12 a une largeur de bloc LB12. Ces blocs sont chacun pourvu d'au moins une incision 20, 21, 23 s'étendant dans la longueur du bloc.

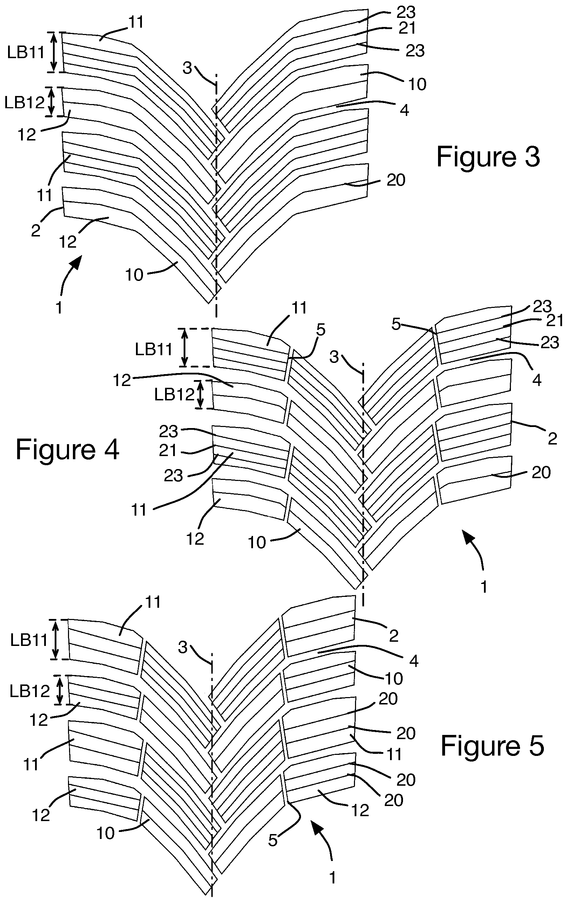

Comme on peut l'observer dans l'exemple de la figure 2, mais aussi dans les exemples des figures 3 à 5, les largeurs LB11 et LB12 des deux blocs adjacents 11 et 12 sont différentes. Dans les exemples illustrés, la largeur LB11 est supérieure à la largeur LB12.

Ces figures permettent également d'observer que le nombre d'incisions Nib dans ces deux blocs adjacents 11 et 12 est différent. Pour chacun des deux blocs adjacents 11 et 12 le nombre d'incisions Nib et les largeurs LB11 et LB12 des blocs sont sélectionnés selon la relation dimensionnelle suivante : 3.5mm<LB/(Nib+1)<7mm, LB étant égale à la largeur LB11 d'un premier bloc 11 desdits au moins deux blocs adjacents 11 et 12, ou LB étant égale à la largeur LB12 d'un deuxième bloc 12 desdits au moins deux blocs adjacents 11 et 12.

Dans l'exemple de la figure 2, on retrouve 3 incisions cheminant le long des blocs 11, partitionnant ces blocs en quatre parties allongées et parallèles. Comme on peut le voir à la figure 1, montrant une coupe d'un exemple de bloc 10 comprenant trois incisions 20, l'incision centrale, dite première incision 21, a une profondeur H_{GE} et comporte un élargissement 22 dans la portion la plus profonde. La première incision 21 partitionne le bloc en deux demi-blocs.

Les incisions latérales, dites secondes incisions 23, ont une profondeur H_{L}. Les profondeurs H_{L} et H_{GE} sont avantageusement prévues en fonction de la relation suivante: 0.1 H_{GE} < H_{L} < 0.9 H_{GE}. En variante, la relation est plus restrictive, comme suit : 0.4 H_{GE} < H_{L} < 0.6 H_{GE}.

La profondeur H_{GE} de la première incision 21 est comprise entre 6 mm et 8 mm.

La figure 3 est une représentation schématique d'un second mode de réalisation du pneumatique dans lequel au moins un desdits deux blocs adjacents 11 et 12 s'étend sensiblement jusqu'à un des bords 2 de ladite bande de roulement 1. Dans l'exemple illustré, l'ensemble des blocs 10 se prolonge jusqu'à un des bords 2. La portion axialement extérieure des blocs est légèrement incurvée, de sorte que l'extrémité axialement extérieure des blocs est sensiblement perpendiculaire à l'axe circonférentiel 3.

La figure 4 est une représentation schématique d'un troisième mode de réalisation du pneumatique, constituant une variante du mode de réalisation de la figure 3, dans lequel une rainure 5 sépare les blocs en deux parties espacées axialement. Dans cet exemple de réalisation, le nombre d'incisions est identique dans les deux parties des blocs. Les blocs les plus larges 11, de largeur LB11, comprennent trois incisions, avec un agencement tel qu'illustré dans le bloc de la figure 1. Les blocs plus étroits 12, de largeur LB12, comportent une seule incision, avec ou sans élargissement 22.

La figure 5 illustre une autre variante de réalisation, dans laquelle chaque partie des blocs adjacents comprend un nombre différent d'incisions 20, 21, 23. Les incisions peuvent être avec ou sans élargissement 22. Dans cet exemple, les blocs centraux les plus larges comprennent trois incisions et les blocs latéraux les plus larges 11 comprennent deux incisions. Les blocs centraux plus étroits comportent une seule incision, et les blocs latéraux plus étroits 12 comportent deux incisions.

Dans les différents exemples illustrés, la bande de roulement 1 est avantageusement directionnelle.

**Numéros de référence employés sur les figures**

| | |
|---|---|
| 1 | Bande de roulement |
| 2 | Bord de bande de roulement |
| 3 | Axe de centre de bande de roulement |
| 4 | Rainure oblique |
| | |
| 10 | Blocs |
| 11,12 | Blocs adjacents |
| | |
| 20 | Incisions |
| 21 | Incision avec élargissement |
| 22 | Elargissement |
| 23 | Incision sans élargissement |

## Revendications

1. Pneumatique comportant une bande de roulement (1) pourvue de deux bords (2), un centre (3) et une pluralité de blocs (10) répartis selon une direction circonférentielle, chaque bloc (10) s'étendant vers le centre (3) de ladite bande de roulement (1) selon une direction oblique, la pluralité de blocs (10) comprenant au moins deux blocs adjacents (11, 12) selon la direction circonférentielle, chaque bloc adjacent desdits au moins deux blocs adjacents (11, 12) ayant au moins une incision (20, 21, 23) s'étendant dans la longueur dudit bloc, des largeurs LB11 LB12 desdits au moins deux blocs adjacents (11, 12) étant différentes et le nombre d'incisions Nib dans lesdits au moins deux blocs adjacents (11, 12) étant différent, la largeur d'un bloc desdits au moins deux blocs adjacents (11, 12) est obtenue en déterminant la moyenne des largeurs du bloc mesurées transversalement par rapport à l'au moins une incision (20, 21, 23), au point de départ, au point d'arrivée et au milieu du bloc,
**caractérisé en ce que** pour chacun desdits au moins deux blocs adjacents (11, 12) le nombre d'incisions Nib et la largeur LB du bloc, sont sélectionnés de sorte que: 3.5mm<LB/(Nib+1)<7mm, LB étant égale à la largeur LB11 d'un premier bloc (11) desdits au moins deux blocs adjacents (11,12), ou LB étant égale à la largeur LB12 d'un deuxième bloc (12) desdits au moins deux blocs adjacents (11,12).

2. Pneumatique selon la revendication 1, **caractérisé en ce que** les incisions (20, 21, 23) partitionnent chaque bloc desdits au moins deux blocs adjacents (11, 12) en deux demi-blocs, la séparation étant sensiblement dans le sens longitudinal des blocs.

3. Pneumatique selon l'une quelconque des revendications 1 à 2, **caractérisé en ce que** au moins un bloc desdits au moins deux blocs adjacents (11, 12) comprend une première incision (21) et une seconde incision (23), chaque incision (21, 23) s'étend dans la longueur dudit au moins un bloc, et **en ce que** la première incision (21) a une profondeur H_{GE}, ladite première incision (21) comportant un élargissement (22) dans ladite profondeur et **en ce que** ladite seconde incision (23) a une profondeur H_{L}, avec 0.1 H_{GE} < H_{L} < 0.9 H_{GE} .

4. Pneumatique selon la revendication 3, **caractérisé en ce que** ladite seconde incision (23) a une profondeur H_{L}, avec 0.4 H_{GE} < H_{L} < 0.6 H_{GE}.

5. Pneumatique selon la revendication 3 ou 4, **caractérisé en ce que** la profondeur H_{GE} de la première incision (21) est comprise entre 6 mm et 8 mm.

6. Pneumatique selon l'une des revendications 3 à 5, **caractérisé en ce que** la première incision (21) partitionne le bloc en deux demi-blocs.

7. Pneumatique selon l'une quelconque des revendications 1 à 6, **caractérisé en ce que** au moins un bloc desdits au moins deux blocs adjacents (11, 12) s'étend sensiblement jusqu'à un des bords (2) de ladite bande de roulement (1).

8. Pneumatique selon la revendication 7, **caractérisé en ce que** lesdits au moins deux blocs adjacents (11, 12) s'étendant jusqu'à un des bords (2) de la bande de roulement (1) comprennent une rainure (5) séparant au moins un bloc desdits au moins deux blocs adjacents (11, 12) en deux parties espacées axialement.

9. Pneumatique selon la revendication 8, **caractérisé en ce que** chaque partie dudit au moins un bloc comprend un nombre différent d'incisions (20, 21, 23).

10. Pneumatique selon l'une quelconque des revendications 1 à 9, **caractérisé en ce que** la bande de roulement (1) est directionnelle.

## Patentansprüche

1. Reifen mit einem Laufstreifen (1), der mit zwei Rändern (2), einer Mitte (3) und mehreren Blöcken (10), die in einer Umfangsrichtung verteilt sind, versehen ist, wobei sich jeder Block (10) in einer schrägen Richtung zur Mitte (3) des Laufstreifens (1) hin erstreckt, wobei die mehreren Blöcke (10) zumindest zwei in der Umfangsrichtung benachbarte Blöcke (11, 12) umfassen, wobei jeder benachbarte Block der zumindest zwei benachbarten Blöcke (11, 12) zumindest einen Einschnitt (20, 21, 23) aufweist, der sich in der Länge des Blocks erstreckt, wobei die Breiten LB11 und LB12 der zumindest zwei benachbarten Blöcke (11, 12) unterschiedlich sind und die Anzahl der Einschnitte Nib in den zumindest zwei benachbarten Blöcken (11, 12) unterschiedlich ist, wobei die Breite eines Blocks der zumindest zwei benachbarten Blöcke (11, 12) durch Bestimmen des Durchschnitts der Breiten des Blocks, gemessen quer zu dem zumindest einen Einschnitt (20, 21, 23) am Anfangspunkt, am Endpunkt und in der Mitte des Blocks, erhalten wird,
**dadurch gekennzeichnet, dass** für jeden der zumindest zwei benachbarten Blöcke (11, 12) die Anzahl der Einschnitte Nib und die Breite LB des Blocks so gewählt sind, dass: 3,5 mm < LB / (Nib + 1) < 7 mm, wobei LB gleich der Breite LB11 eines ersten Blocks (11) der zumindest zwei benachbarten Blöcke (11, 12) ist oder wobei LB gleich der Breite LB12 eines zweiten Blocks (12) der zumindest zwei benachbarten Blöcke (11, 12) ist.

2. Reifen nach Anspruch 1, **dadurch gekennzeichnet, dass** die Einschnitte (20, 21, 23) jeden Block der zumindest zwei benachbarten Blöcke (11, 12) in zwei Halbblöcke teilen, wobei die Teilung im Wesentlichen in der Längsrichtung der Blöcke erfolgt.

3. Reifen nach einem der Ansprüche 1 bis 2, **dadurch gekennzeichnet, dass** zumindest ein Block der zumindest zwei benachbarten Blöcke (11, 12) einen ersten Einschnitt (21) und einen zweiten Einschnitt (23) umfasst, wobei sich jeder Einschnitt (21, 23) in der Länge des zumindest einen Blocks erstreckt, und dass der erste Einschnitt (21) eine Tiefe H_{GE} aufweist, wobei der erste Einschnitt (21) in der Tiefe eine Verbreiterung (22) aufweist, und dass der zweite Einschnitt (23) eine Tiefe H_{L} aufweist, wobei 0,1 H_{GE} < H_{L} < 0,9 H_{GE}.

4. Reifen nach Anspruch 3, **dadurch gekennzeichnet, dass** der zweite Einschnitt (23) eine Tiefe H_{L} aufweist, wobei 0,4 H_{GE} < H_{L} < 0,6 H_{GE}.

5. Reifen nach Anspruch 3 oder 4, **dadurch gekennzeichnet, dass** die Tiefe H_{GE} des ersten Einschnitts (21) zwischen 6 mm und 8 mm beträgt.

6. Reifen nach einem der Ansprüche 3 bis 5, **dadurch gekennzeichnet, dass** der erste Einschnitt (21) den Block in zwei Halbblöcke teilt.

7. Reifen nach einem der Ansprüche 1 bis 6, **dadurch gekennzeichnet, dass** sich zumindest ein Block der zumindest zwei benachbarten Blöcke (11, 12) im Wesentlichen bis zu einem der Ränder (2) des Laufstreifens (1) erstreckt.

8. Reifen nach Anspruch 7, **dadurch gekennzeichnet, dass** sich die zumindest zwei benachbarten Blöcke (11, 12), die sich bis zu einem der Ränder (2) des Laufstreifens (1) erstrecken, eine Rille (5) aufweisen, die zumindest einen Block der zumindest zwei benachbarten Blöcke (11, 12) in zwei axial beabstandete Teile teilt.

9. Reifen nach Anspruch 8, **dadurch gekennzeichnet, dass** jeder Teil des zumindest einen Blocks eine unterschiedliche Anzahl an Einschnitten (20, 21, 23) umfasst.

10. Reifen nach einem der Ansprüche 1 bis 9, **dadurch gekennzeichnet, dass** der Laufstreifen (1) direktional ist.

## Claims

1. Tyre having a tread (1) provided with two edges (2), a centre (3) and a plurality of blocks (10) distributed in a circumferential direction, each block (10) extending towards the centre (3) of said tread (1) in an oblique direction, the plurality of blocks (10) comprising at least two adjacent blocks (11, 12) in the circumferential direction, each adjacent block of said two adjacent blocks having at least one sipe (20, 21, 23) extending along the length of the block, widths LB11, LB12 of said at least two adjacent blocks (11, 12) being different and the number of sipes Nib in said adjacent blocks is different, the width of a block of said at least two adjacent blocks (11,12) being obtained by determining the average of the widths of the block that are measured transversely with respect to the at least one sipe (20, 21, 23), at the starting point, at the end point and at the middle of the block.
**characterized in that** for each of said at least two adjacent blocks (11, 12), the number of sipes Nib and the width LB of the block is chosen such that: 3.5 mm<LB/ (Nib+1)<7 mm, LB being equal to the width LB11 of a first block (11)of said at least two adjacent blocks (11,12) or LB being equal to the width LB12 of a second block (12)of said at least two adjacent blocks (11,12).

2. Tyre according to Claim 1, **characterized in that** the sipes (20, 21, 23) divide each block of said at least two adjacent blocks(11,12) into two half-blocks, the separation being substantially in the longitudinal direction of the blocks.

3. Tyre according to any one of Claims 1 to 2, **characterized in that** at least one block of said at least two adjacent blocks (11, 12) comprises a first sipe (21) and a second sipe (23), each sipe (21,23) extending along the length of said block, and **in that** the first sipe (21) has a depth H_{GE}, said first (21) sipe having a widened portion (22) in said depth, and **in that** said second sipe (23) has a depth H_{L}, where 0.1 H_{GE}<H_{L}<0.9 H_{GE}.

4. Tyre according to Claim 3, **characterized in that** said second sipe (23) has a depth H_{L}, where 0.4 H_{GE}<H_{L}<0.6 H_{GE}.

5. Tyre according to Claim 3 or 4, **characterized in that** the depth H_{GE} of the first sipe (21) is between 6 mm and 8 mm.

6. Tyre according to one of Claims 3 to 5, **characterized in that** the first sipe (21) divides the block into two half-blocks.

7. Tyre according to any one of Claims 1 to 6, **characterized in that** at least one of said adjacent blocks (11, 12) extends substantially as far as one of the edges (2) of said tread (1).

8. Tyre according to Claim 7, **characterized in that** said adjacent blocks (11, 12) extending as far as one of the edges (2) of the tread (1) comprise a groove (5) separating at least one block of said at least two adjacent blocks (11, 12) into two axially spaced-apart parts.

9. Tyre according to Claim 8, **characterized in that** each part of said at least one block comprises a different number of sipes (20, 21, 23).

10. Tyre according to any one of Claims 1 to 9, **characterized in that** the tread (1) is directional.
